# EUROPEAN PATENT SPECIFICATION

(11) **EP 2 309 879 B1**
(45) Date of publication and mention of the grant of the patent: **30.03.2016**
(21) Application number: 09789854.8
(22) Date of filing: 19.06.2009
(51) Int. Cl.: A23L 33/155, A23L 33/10, A23L 33/15, A23L 5/00, A23L 2/54

(54) **IMPROVED EMULSIFYING SYSTEM FOR NUTRACEUTICAL COMPOSITION**
VERBESSERTES EMULGIERSYSTEM FÜR NUTRAZEUTISCHE ZUSAMMENSETZUNG
SYSTÈME D ÉMULSIFICATION AMÉLIORÉ POUR UNE COMPOSITION NUTRACEUTIQUE

(30) Priority: 15.07.2008 US 173400
(43) Date of publication of application: 20.04.2011
(73) Proprietor: Comstock, Robert Lawrence, Singapore 266925 (SG)
(72) Inventor: WANG, Mei, Yin, Singapore 530363 (SG); WONG, Hwee Min, Singapore 680213 (SG); NGOOI,Wan Pin, Johor Darul Taksim 81000 (MY)
(74) Representative: Fiener, Josef
(86) International application number: PCT/US2009/047900
(87) International publication number: WO 2010/008762

(56) References cited:
- EP-A- 0 659 347
- EP-A- 1 927 287
- WO-A-2007/026271
- WO-A-2008/039564
- WO-A-2008/055374
- WO-A-2009/098469

## Description

### Area of the Art

This invention relates to a process that solubilizes insoluble vitamins and dietary supplements to produce optically clear nutraceutical beverages.

### Background

There is increasing worldwide interest in "functional foods" or "nutraceuticals." These are food items that blend the traditional characteristics of foods-namely to provide nourishment and essential nutrients and drugs or dietary supplements which are intended to cure, ameliorate or prevent certain health problems. In some ways these "new" products actually harken back to food products of much earlier times. For many millennia human diets were relatively stable and unchanging. Initially humans were hunter and gathers living off the available animals and plants of the local environment. Humans evolved to correctly utilize both the macro-nutrients (carbohydrates, lipids and proteins) as well as the micro-nutrients (vitamins, minerals and vitamin-like organic compounds) in their food supply. There were occasional revolutions in the diet as when agriculture supplanted hunting and gathering, but even such revolutions were gradual and humans adapted to their food supply. The major problem with the food supply was undoubtedly shortages.

Humans gradually discovered that certain foods (often of plant origin but occasionally even animal products) had additional properties that cured disease or otherwise modified human existence. These were the natural "drugs" that were used as medicines. In this day of giant pharmaceutical companies it is difficult for many to appreciate that only a few generations ago all drugs and medicines came from natural sources.

The balance between humans and their food supply was destroyed after the industrial revolution with the rise of chemistry and food science. Food production became increasingly mechanized and the use of processed foods transported great distances became increasingly common. It was found that refined foods were more stable and easily handled. Gradually people came to prefer foods that were more and more highly processed and refined. At about the same time active molecules were isolated from drug plants and modern pharmaceutical science was launched. The end effect was to partly uncouple micro-nutrients from macro-nutrients in the human diet. The curative and preventative roles formerly played by micro-nutrients in the food supply were taken over by pharmaceuticals.

More recently there have been attempts to reverse these trends and restore the curative properties of the food supply. This has been primarily through ingestion of vitamins and nutritional or dietary supplements. Although this approach has seen some success, it is somewhat modeled on the pharmaceutical approach of pills and potions. Now the desire is to move back to foods that actually provide the micro as well as macro-nutrients. In some cases this is best achieved by using relatively unprocessed foods from which few, if any, of the micronutrients have been removed. In other cases, it is necessary to add the micro-nutrients to foods or beverages to achieve sufficient levels of these ingredients.

In particular the importance of natural anti-oxidants such as tocopherols and tocotrienols (members of the vitamin E family), rosemary oil, omega-3 fatty acids, oleuropein, Co-enzyme Q10, and carotenoids such as lutein, beta-carotene and, astaxanthin. Spices such as paprika and turmeric, hydrophobic vitamins such as vitamin D and vitamin K and other lipophilic substances have been recognized as important nutraceuticals. It is not always convenient to add such lipophilic substances to solid food articles. Instead, it is desired to provide these materials in beverages. Unfortunately, these substances cannot dissolve in aqueous beverages and resist suspension with the most commonly used emulsifying systems. Ideally, these substances would be components in enhanced "water" beverages. However, addition to water not only requires effective emulsifying but also requires a system that produces an optically clear beverage because most people expect water to be clear and are naturally drawn to optically clear, "water-like" beverages. The present invention provides more ready solubilization of hydrophobic nutraceutical materials. In particular it produces concentrates wherein the nutraceutical materials are present as stable nanometer size (usually less than 50 nm) droplets which hence form optically clear aqueous solutions. Apart from the cosmetic advantages of nanometer particles or droplets, the concentrates may have significant functional advantages. The nanometer particles or droplets are more readily dispersed and may be more readily and rapidly absorbed when ingested. This can improve the bioavailability and may result in lower effective doses.

EP 1 927 287 teaches an emulsified composition of water phase containing one or more primary surfactants with an oil phase containing an oil-based material and a phospholipid (secondary surfactant), where the weight ratio of surfactant to oil phase less phospholipid ranges from 0.5 to 2.0 while the ratio of surfactant to phospholipid ranges from 5 to 50.

WO 2008/039 564 teaches a surfactant system capable of suspending solid particles wherein the water phase ranges between no sugar and a saturating amount of dissolved sugar plus a sugar ester and/or saponin with an HLB greater than 10 and at least one fatty acid and/or lecithin wherein the surfactants are free from alkoxy groups.

### Detailed Description of the Invention

The following description is provided to enable any person skilled in the art to make and use the invention and sets forth the best modes contemplated by the inventor of carrying out his invention. Various modifications, however, will remain readily apparent to those skilled in the art, since the general principles of the present invention have been defined herein specifically to provide an improved process for solubilizatiori of hydrophobic nutraceutical materials.

We have developed an improved process and composition for emulsifying hydrophobic nutraceutical substances. In the composition the primary emulsifier is a sucrose fatty acid ester. This is combined with cosolvents and secondary emulsifiers.

We have discovered that the difficulties some workers have with dissolving sucrose fatty acid esters can be obviated by first producing a sucrose-cosolvent solution. The fatty acid sucrose ester is added to this solution and mixed until completely dispersed to form a sucrose ester-cosolvent primary emulsifier. Propylene glycol and glycerol are effective cosolvents to produce aqueous solutions of sucrose fatty acid esters. The exact amounts and ratios of the cosolvents vary over a wide effective range. There is a limit to the amount of propylene glycol used in that phase separation will occur if the critical amount is exceeded. The limit for glycerol is higher than that for propylene glycol. Other edible cosolvents are also useable in the invention.

Sucrose fatty acid esters with medium to high HLB (hydrophilic-lipophilic balance) can be used in the invention. Although the examples below use sucrose monopalmitate, other sucrose fatty acid esters that can be used on their own or as a blend include sucrose laurate, sucrose myristate, sucrose stearate, sucrose oleate and mixtures of these compounds. It has been found that medium HLB (hydrophilic-lipophilic balance) (e.g., HLB of 8-16) sucrose esters of around 50-80% monoester content work well in the invention when combined with other surfactants (cosurfactants) of higher HLB. With current formulations sucrose ester concentrations between 1.5% and 10% are used. However, it is possible to use even higher levels of sucrose ester to achieve higher levels of nutraceutical in the final concentrate.

Separately the hydrophobic nutraceutical is combined with a secondary emulsifier such as lecithin, lysolecithin or hydoxylated lecithin to form an "oil." As is well-known to those of skill in the art, lecithin comes in both fluid and deoiled versions. The deoiled version is in powder form with a higher phospholipid content. Three types of lecithin can be used in the present invention: standard lecithin (unmodified), hydroxylated lecithin and lysolecithin (enzyme modified). Actual oils (such as triglycerides) can also be added to improve the solubility of the hydrophobic nutraceutical in the "oil."

The "oil" is then added to and homogenized with the sucrose ester-cosolvent primary emulsifier under conditions which protect labile nutraceuticals. For example, the process can be carried out at temperatures below room temperature (25°C) and under a blanket of inert gas (e.g., nitrogen or argon) to limit or prevent oxidation. This results in an optically clear emulsified nutraceutical concentrate wherein the nutraceutical particles (droplets where the nutraceutical is liquid) are around 50 nm or less in diameter. As is known in the art, nanoparticles or nanodroplets of this size produce optically clear solutions when dispersed in aqueous solutions. The concentrate is readily dispersible in water to form a clear beverage with only simple mixing. A wide range of nutraceutical concentrations are available to meet formulation demands. The emulsified nutraceutical concentrate produced according to this invention is sufficiently stable as to withstand conversion into a powder using methods known to those of ordinary skill in the art such as spray drying, freeze drying (lyophilization) and super critical fluid extraction (e.g., with liquid carbon dioxide). These techniques yield a powder nutraceutical concentrate that is readily dispersible in aqueous solutions in a manner similar to the liquid emulsified nutraceutical concentrate.

As for sucrose ester to lecithin ratio, it is important to maintain the ratio of sucrose ester to lecithin as high as possible, thereby minimizing negative taste impact. In term of performance such as beverage clarity and concentrate stability, there exists a range of sucrose ester to lecithin ratio that has to be optimized for each nutraceutical. Departing from the range results in a more turbid beverage.

The following examples more clearly delineate our inventive composition.

Example 1--Nutraceutical Solutions containing Coenzyme Q10: This example discloses the preparation of a 0.5 kg batch of 3% Coenzyme Q10 oil concentrate that is readily dispersible in water to form nutraceutical beverages and other products.

Sucrose ester mixture-Sucrose (175 g) is dissolved in 102.5 g of water by mixing at 60°C. The mixture is cooled to 25°C and propylene glycol (75 g) and glycerol (102.5 g) are mixed into the sucrose solution as cosolvents. Sucrose monopalmitate (12 g = 2.5% by weight of final mixture) is added to the sucrose/cosolvent mixture and mixed at 6,000 rpm in a high shear mixer under a vacuum of about 120 mbar. Dissolution takes 10 min or so. If any sucrose ester remains undissolved after 10 min, mixing is continued under vacuum until dissolution is complete.

Nutraceutical oil-Coenzyme Q10 (15 g) is combined with medium chain length triglycerides (15 g) and deoiled lecithin (3 g) and mixed at 60°C until a homogeneous orange colored oil is formed.

Coenzyme Q10 concentrate-The nutraceutical oil is quickly added to the sucrose ester mixture after releasing the vacuum. Vacuum (120 mbar) is quickly reestablished and mixing is continued at 6,000 rpm for 10 min under vacuum. The concentrate is then transferred to a homogenizer that is maintained at 4°C. The mixture is homogenized at 800 bar (640 bar first stage and 160 bar second stage) for six cycles. Time is allowed for the homogenate to cool between cycles. Oxidation is controlled by cooling and by blanketing the mixture with nitrogen during homogenization. Average particle size of the final concentrate is about 50 nm following homogenization.

Example 2--Nutraceutical Solutions containing omega-3 fatty acids: This example discloses the preparation of a 0.5kg batch of 10% omega-3 oil concentrate that is readily dispersible in water to form nutraceutical beverages and other products.

Sucrose ester mixture-Sucrose (178 g) is dissolved in 90.15 g of water by mixing at 60°C. The mixture is cooled to 25 °C and propylene glycol (66.7 g) and glycerol (90.15 g) are mixed into the sucrose solution as cosolvents. Sucrose monopalmitate (25 g = 5% by weight of final mixture) is added to the sucrose/cosolvent mixture and mixed at 6,000 rpm in a high shear mixer under a vacuum of about 120 mbar. Dissolution takes 10 min or so. If any sucrose ester remains undissolved after 10 min, mixing is continued under vacuum until dissolution is complete.

Nutraceutical oil-Oil containing docosahexaenoic acid (DHA) (an omega-3 fatty acid) (50 g) is combined with dI-alpha-tocopherol (1 g), ascorbyl palmitate (0.05 g), rosemary extract (0.1 g) and hydroxylated lecithin and or lysolecithin (0.25g) (or mixtures thereof) and mixed until a homogeneous oil is formed.

Omega-3 fatty acid concentrate-The nutraceutical oil is quickly added to the sucrose ester mixture after releasing the vacuum. Vacuum (120 mbar) is quickly reestablished and mixing is continued at 6,000 rpm for 10 min under vacuum. During mixing the temperature of the mixture is lowered to 4°C. The concentrate is then transferred to a homogenizer that is maintained at 4°C. The mixture is homogenized at 800 bar (640 bar first stage and 160 bar second stage) for six cycles. Time is allowed for the homogenate to cool between cycles. Oxidation is controlled by cooling and by blanketing the mixture with nitrogen during homogenization. Average particle size of the final concentrate is about 40 nm following homogenization.

Example 3--Nutraceutical Solutions containing Tocopherol Acetate: This example discloses the preparation of 0.5 kg of a 3% tocopherol acetate concentrate that is readily dispersible in water to form nutraceutical beverages and other products.

Sucrose ester mixture-Sucrose (185 g) is dissolved in 105 g of water by mixing at 60°C. The mixture is cooled to 25°C and propylene glycol (75 g) and glycerol (105 g) are mixed into the sucrose solution as cosolvents. Sucrose monopalmitate (7.5 g = 1.5% by weight of final mixture) is added to the sucrose/cosolvent mixture and mixed at 6,000 rpm in a high shear mixer under a vacuum of about 120 mbar. Dissolution takes 10 min or so. If any sucrose ester remains undissolved after 10 min, mixing is continued under vacuum until dissolution is complete.

Nutraceutical oil-DI tocopherol acetate (15 g) is combined with hydoxylated lecithin and or lysolecithin (7.5 g) (or mixtures thereof) and mixed until a homogeneous oil is formed.

Tocopherol acetate concentrate-The nutraceutical oil is quickly added to the sucrose ester mixture after releasing the vacuum. Vacuum (120 mbar) is quickly reestablished and mixing is continued at 6,000 rpm for 10 min under vacuum. The temperature of the mixture is maintained at 4°C. The concentrate is then transferred to a homogenizer that is also maintained at 4°C. The mixture is homogenized at 800 bar (640 bar first stage and 160 bar second stage) for six cycles. Time is allowed for the homogenate to cool between cycles. Oxidation is controlled by cooling and by blanketing the mixture with nitrogen during homogenization. Average particle size of the final concentrate is about 50 nm following homogenization.

Example 4--Natraceutical Solutions containing Tocotrienols: This example discloses the preparation of a 0.5 kg batch of 3% tocotrienols concentrate that is readily dispersible in water to form nutraceutical beverages and other products.

Sucrose ester mixture-Sucrose (175 g) is dissolved in 143.75 g of water by mixing at 60°C. The mixture is cooled to 25°C and propylene glycol (75 g) and glycerol (50 g) are mixed into the sucrose solution as cosolvents. Sucrose monopalmitate (13.4 g = 2.7% by weight of final mixture) is added to the sucrose/cosolvent mixture and mixed at 6,000 rpm in a high shear mixer under a vacuum of about 120 mbar. Dissolution takes 10 min or so. If any sucrose ester remains undissolved after 10 min, mixing is continued under vacuum until dissolution is complete.

Nutraceutical oil-Oil containing tocotrienols (15 g) is combined with medium chain length triglycerides (22.5 g) and hydoxylated lecithin and or lysolecithin (5.35 g) (or mixtures thereof) and mixed until a homogeneous oil is formed.

Tocotrienols concentrate-The nutraceutical oil is quickly added to the sucrose ester mixture after releasing the vacuum. Vacuum (120 mbar) is quickly reestablished and mixing is continued at 6,000 rpm for 10 min under vacuum. The temperature of the mixture is maintained at 4°C. The concentrate is then transferred to a homogenizer that is also maintained at 4°C. The mixture is homogenized at 800 bar (640 bar first stage and 160 bar second stage) for six cycles. Time is allowed for the homogenate to cool between cycles. Oxidation is controlled by cooling and by blanketing the mixture with nitrogen during homogenization. Average particle size of the final concentrate is about 50 nm following homogenization.

The following claims are thus to be understood to include what is specifically illustrated and described above, what is conceptually equivalent, what can be obviously substituted and also what essentially incorporates the essential idea of the invention. Those skilled in the art will appreciate that various adaptations and modifications of the just-described preferred embodiment can be configured without departing from the scope of the invention. The illustrated embodiment has been set forth only for the purposes of example and that should not be taken as limiting the invention. Therefore, it is to be understood that, within the scope of the appended claims, the invention may be practiced other than as specifically described herein.

## Claims

1. A concentrate of hydrophobic nutraceutical nanometer droplets said concentrate readily dispersible into a clear aqueous solution and comprising:
a sucrose fatty acid ester as primary emulsifier initially dissolved in a solution of water, sucrose and hydrophilic cosolvents; and
a hydrophobic nutraceutical initially dissolved with a lecithin compound to form a nutraceutical oil, wherein the sucrose fatty acid ester solution and the nutraceutical oil are homogenized together to form the concentrate of hydrophobic nutraceutical nanoparticles containing at least 0.5% by weight hydrophobic nutraceutical.

2. The concentrate of claim 1, wherein said sucrose fatty acid ester has a medium HLB.

3. The concentrate of claim 1, wherein said sucrose fatty acid ester has a monoester content of at least 50%.

4. The concentrate of claim 1, wherein said sucrose fatty acid ester is selected from the group consisting of sucrose laurate, sucrose myristate, sucrose stearate, sucrose oleate and mixtures thereof.

5. The concentrate of claim 1, wherein the cosolvents include propylene glycol and glycerol.

6. The concentrate of claim 1, wherein the lecithin compound is selected from the group consisting of lecithin, hydroxylated lecithin, lysolecithin and mixtures thereof.

7. The concentrate of claim 1, wherein the hydrophobic nutraceutical is selected from the group consisting of omega-3 fatty acids, tocopherol, tocotrienols, carotenoids, vitamin D, vitamin K, turmeric, paprika and coenzyme Q10.

8. The concentrate of claim 1 formulated as a powder.

9. A process for making a nanodroplet hydrophobic nutraceutical concentrate which is readily dispersible into aqueous solution comprising the steps of:
dissolving a sucrose fatty acid ester as primary emulsifier in a solution of water, sucrose and hydrophilic cosolvents;
forming a nutraceutical oil by dissolving a hydrophobic nutraceutical with a lecithin compound to form a nutraceutical oil; and
homogenizing the dissolved sucrose fatty acid ester and the nutraceutical oil to yield the nanodroplet hydrophobic nutraceutical concentrate.

10. The process of claim 9, wherein the step of homogenizing further comprises the steps of mixing the dissolved fatty acid ester with a high shear mixer, adding the nutraceutical oil thereto while continuing mixing to form a mixture and transferring the mixture to an 800 bar homogenizer for homogenization.

11. The process of claim 9, wherein said sucrose fatty acid ester has a medium HLB , wherein said sucrose fatty acid ester preferably has a monoester content of at least 50%, and wherein said sucrose fatty acid ester is preferably selected from the group consisting of sucrose laurate, sucrose myristate, sucrose stearate, sucrose oleate and mixtures thereof, in particular wherein the cosolvents include propylene glycol and glycerol and, wherein the lecithin compound is especially selected from the group consisting of lecithin, hydroxylated lecithin, lysolecithin and mixtures thereof.

12. The process of claim 9, wherein the hydrophobic nutraceutical is selected from the group consisting of omega-3 fatty acids, tocopherol, tocotrienols, carotenoids, vitamin D, vitamin K, turmeric, paprika and coenzyme Q10.

13. The process of claim 9, wherein the step of homogenization is carried out at a temperature below room temperature.

14. The process of claim 9, wherein the step of homogenization is carried out under a blanket of inert gas.

15. The process of claim 9 further comprising a step of forming a powder from the hydrophobic nutraceutical concentrate.

## Patentansprüche

1. Konzentrat aus hydrophoben, nutrazeutischen Nanotröpfchen, wobei das Konzentrat leicht in eine klare, wässrige Lösung dispergierbar ist, umfassend:
einen Saccharose-Fettsäureester als Primäremulgator, der zunächst in einer Lösung aus Wasser, Saccharose und hydrophilen Co-Lösungsmitteln gelöst ist; und
ein hydrophobes Nutrazeutikum, das zunächst mit einer Lecithin-Verbindung gelöst ist, um ein Nutrazeutikum-Öl zu bilden, wobei die Saccharose-Fettsäureester-Lösung und das Nutrazeutikum-Öl miteinander homogenisiert sind, um das Konzentrat aus hydrophoben, nutrazeutischen Nanopartikeln mit einem Gehalt an hydrophobem Nutrazeutikum von mindestens 0,5 Gew.-% zu bilden.

2. Konzentrat nach Anspruch 1, wobei der Saccharose-Fettsäureester einen mittleren HLB aufweist.

3. Konzentrat nach Anspruch 1, wobei der Saccharose-Fettsäureester einen Monoestergehalt von mindestens 50% aufweist.

4. Konzentrat nach Anspruch 1, wobei der Saccharose-Fettsäureester ausgewählt ist aus der Gruppe, bestehend aus Saccharoselaurat, Saccharosemyristat, Sucrosestearat, Saccharoseoleat und deren Mischungen.

5. Konzentrat nach Anspruch 1, wobei die Co-Lösungsmittel Propylenglykol und Glycerin umfassen.

6. Konzentrat nach Anspruch 1, wobei die Lecithin-Verbindung ausgewählt ist aus der Gruppe, bestehend aus Lecithin, hydroxyliertes Lecithin, Lysolecithin und deren Mischungen.

7. Konzentrat nach Anspruch 1, wobei das hydrophobe Nutrazeutikum ausgewählt ist aus der Gruppe, bestehend aus Omega-3-Fettsäuren, Tocopherol, Tocotrienolen, Carotinoiden, Vitamin D, Vitamin K, Kurkuma, Paprika und Coenzym Q10.

8. Konzentrat nach Anspruch 1, das als ein Pulver formuliert ist.

9. Verfahren zur Herstellung eines Konzentrats aus hydrophoben, nutrazeutischen Nanotröpfchen, das leicht in wässriger Lösung dispergierbar ist, umfassend die Schritte:
Lösen eines Saccharose-Fettsäureester als Primäremulgator in einer Lösung aus Wasser, Saccharose und hydrophilen Co-Lösungsmitteln;
Bilden eines Nutrazeutikum-Öls durch Lösen eines hydrophoben Nutrazeutikums mit einer Lecithin Verbindung, um ein Nutrazeutikum-Öl zu bilden; und
Homogenisieren des gelösten Saccharose-Fettsäureesters und des Nutrazeutikum-Öls, um ein Konzentrat aus hydrophoben, nutrazeutischen Nanotröpfchen zu ergeben.

10. Verfahren nach Anspruch 9, wobei der Homogenisierungsschritt weiterhin die Schritte des Mischens des gelösten Fettsäureesters mit einem Hochscherungsmischer, des Hinzugebens des Nutrazeutikum-Öls während des fortgesetzten Mischens zur Bildung einer Mischung, und des Übertragens der Mischung in einen 800 bar Homogenisator zur Homogenisierung umfasst.

11. Verfahren nach Anspruch 9, wobei der Saccharose-Fettsäureester einen mittleren HLB aufweist, wobei der Saccharose-Fettsäureester bevorzugt einen Monoestergehalt von mindestens 50% hat, und wobei der Saccharose-Fettsäureester vorzugsweise ausgewählt ist aus der Gruppe, bestehend aus Saccharoselaurat, Saccharosemyristat, Sucrosestearat, Saccharoseoleat und deren Mischungen, insbesondere wobei die Co-Lösungsmittel Propylenglykol und Glycerin umfassen, und wobei die Lecithin-Verbindung bevorzugt aus der Gruppe ausgewählt ist, bestehend aus Lecithin, hydroxyliertes Lecithin, Lysolecithin und Mischungen davon.

12. Verfahren nach Anspruch 9, wobei das hydrophobe Nutrazeutikum ausgewählt ist aus der Gruppe, bestehend aus Omega-3-Fettsäuren, Tocopherol, Tocotrienolen, Carotinoiden, Vitamin D, Vitamin K, Kurkuma, Paprika und Coenzym Q10.

13. Verfahren nach Anspruch 9, wobei der Schritt der Homogenisierung bei einer Temperatur unterhalb Raumtemperatur durchgeführt wird.

14. Verfahren nach Anspruch 9, wobei der Schritt der Homogenisierung unter einer Bedeckung aus Inertgas durchgeführt wird.

15. Verfahren nach Anspruch 9, ferner umfassend einen Schritt des Bildens eines Pulvers aus dem hydrophoben, nutrazeutischen Konzentrat.

## Revendications

1. Concentré de gouttelettes nanomères nutraceutiques hydrophobes, ledit concentré facilement dispersible dans une solution aqueuse limpide et comprenant :
un ester d'acide gras de saccharose comme émulsionnant primaire initialement dissous dans une solution d'eau, de saccharose et de co-solvants hydrophiles ; et
un nutraceutique hydrophobe initialement dissous avec un composé de lécithine pour former une huile nutraceutique, dans lequel la solution d'ester d'acide gras de saccharose et l'huile nutraceutique sont homogénéisées ensemble pour former le concentré de nanoparticules nutraceutiques hydrophobes contenant au moins 0,5 % en masse de nutraceutique hydrophobe.

2. Concentré selon la revendication 1, dans lequel ledit ester d'acide gras de saccharose présente une valeur HLB moyenne.

3. Concentré selon la revendication 1, dans lequel ledit ester d'acide gras de saccharose présente une teneur en monoester d'au moins 50%.

4. Concentré selon la revendication 1, dans lequel ledit ester d'acide gras de saccharose est choisi dans le groupe constitué de laurate de saccharose, myristate de saccharose, stéarate de saccharose, oléate de saccharose et mélanges de ceux-ci.

5. Concentré selon la revendication 1, dans lequel les co-solvants comprennent le propylèneglycol et le glycérol.

6. Concentré selon la revendication 1, dans lequel le composé de lécithine est choisi dans le groupe constitué de lécithine, lécithine hydroxylée, lysolécithine et mélanges de celles-ci.

7. Concentré selon la revendication 1, dans lequel le nutraceutique hydrophobe est choisi dans le groupe constitué d'acides gras oméga-3, tocophérol, tocotriénols, caroténoïdes, vitamine D, vitamine K, curcuma, paprika et co-enzyme Q10.

8. Concentré selon la revendication 1 formulé comme une poudre.

9. Procédé de fabrication d'un concentré nutraceutique hydrophobe de nano-gouttelettes qui est facilement dispersible dans une solution aqueuse comprenant les étapes consistant :
à dissoudre un ester d'acide gras de saccharose comme émulsionnant primaire dans une solution d'eau, de saccharose et de co-solvants hydrophiles ;
à former une huile nutraceutique par dissolution d'un nutraceutique hydrophobe avec un composé de lécithine pour former une huile nutraceutique ; et
à homogénéiser l'ester d'acide gras de saccharose dissous et l'huile nutraceutique pour produire le concentré nutraceutique hydrophobe de nanogouttelettes.

10. Procédé selon la revendication 9, dans lequel l'étape d'homogénéisation comprend de plus les étapes de mélange de l'ester d'acide gras dissous avec un mélangeur à cisaillement élevé, d'addition de l'huile nutraceutique à celui-ci tout en continuant à mélanger pour former un mélange et de transfert du mélange dans un dispositif d'homogénéisation à 800 bar pour une homogénéisation.

11. Procédé selon la revendication 9, dans lequel ledit ester d'acide gras de saccharose présente une valeur HLB moyenne,
dans lequel ledit ester d'acide gras de saccharose présente de préférence une teneur en monoester d'au moins 50 %, et
dans lequel ledit ester d'acide gras de saccharose est de préférence choisi dans le groupe constitué de laurate de saccharose, myristate de saccharose, stéarate de saccharose, oléate de saccharose et mélanges de ceux-ci, en particulier dans lequel les co-solvants comprennent le propylèneglycol et le glycérol et, dans lequel le composé de lécithine est particulièrement choisi dans le groupe constitué de lécithine, lécithine hydroxylée, lysolécithine et mélanges de celles-ci.

12. Procédé selon la revendication 9, dans lequel le nutraceutique hydrophobe est choisi dans le groupe constitué d'acides gras oméga-3, tocophérol, tocotriénols, caroténoïdes, vitamine D, vitamine K, curcuma, paprika et co-enzyme Q10.

13. Procédé selon la revendication 9, dans lequel l'étape d'homogénéisation est réalisée à une température inférieure à la température ambiante.

14. Procédé selon la revendication 9, dans lequel l'étape d'homogénéisation est réalisée sous une couverture de gaz inerte.

15. Procédé selon la revendication 9 comprenant de plus une étape de formation d'une poudre à partir du concentré nutraceutique hydrophobe.
